# EUROPEAN PATENT SPECIFICATION

(11) **EP 1 575 821 B1**
(45) Date of publication and mention of the grant of the patent: **27.09.2006**
(21) Application number: 03781197.3
(22) Date of filing: 10.12.2003
(51) Int. Cl.: B62D 33/06

(54) **VEHICLE CAB**
FÜHRERHAUS FÜR KRAFTFAHRZEUG
CABINE DE VEHICULE

(30) Priority: 13.12.2002 SE 0203685
(43) Date of publication of application: 21.09.2005
(73) Proprietor: VOLVO LASTVAGNAR AB, 405 08 Göteborg (SE)
(72) Inventor: FORSMAN, Lars, S-423 39 Torslanda (SE)
(74) Representative: Ekström, Nils
(86) International application number: PCT/SE2003/001935
(87) International publication number: WO 2004/054869

(56) References cited:
- US-A- 3 599 757
- US-A- 6 003 934

## Description

### TECHNICAL FIELD

The present invention relates to a vehicle cab for a vehicle. More particularly, it relates to a vehicle cab which is constructed around a frame construction comprising a front A-pillar and a second substantially upright pillar located behind said A-pillar, for example a B-pillar or C-pillar, which pillars jointly support a roof bar.

### PRIOR ART

Vehicle cabs are usually built around a frame construction. The look of the frame construction is largely determined by strength requirements which ensure that the cab has good collision characteristics and provides a secure driver's compartment should the vehicle overturn. More particularly, the beams which support the roof of the cab, the roof bars, are configured to resist deformation should the upper part of the cab collide with a fixed object. In modern vehicles, moreover, high demands are placed upon visibility and space. It is hence desirable for the frame construction to be formed from as narrow beams as possible. Should the dimensions of the roof bar be reduced, there is a risk of the roof bar being broken off or bent in toward the interior of the cab in the event of collision with a fixed object. Should the roof bar become broken or bent, there is a risk of the upper part of the A-pillar being pressed down and into the cab, so that a driver is at high risk of an accident. In order to ensure that bending or breakage shall not take place, roof bars have therefore been made in thick dimensions. This results in increased weight for the cab, whereupon other included beams also have to be made in relatively thick dimensions.

### DESCRIPTION OF THE INVENTION

The object of the invention is to provide a vehicle cab having a roof bar, in which the risk of the roof bar being broken off or bent is reduced, at the same time as the roof bar is allowed to be configured in relatively slender dimensions. The object of the invention is achieved by virtue of a roof bar according to the characterizing part of patent claim 1. According to the invention, the roof bar has a deformation zone in the front part of the roof bar directed toward said A-pillar, in which the deformation zone is divided into a set of consecutively arranged segments and is arranged with a geometry which ensures that the compressive stress at the most heavily loaded point in each segment is constant or decreasing for following segments in the rearward direction. As a result of the deformation zone, the roof bar is guaranteed to be deformed in the event of collision, with accompanying absorption of energy. The configuration of the deformation zone ensures that the segments of the deformation zone are plasticized in the direction from front to rear, with accompanying absorption of energy. The result of this is that the roof bar will not be able to be bent or broken off before the whole of the deformation zone has been deformed. The risk of the roof bar being broken or bent in an uncontrolled manner outside the deformation zone is herewith reduced, firstly by the fact that the vehicle is slowed as energy is absorbed in the deformation zone and secondly by the fact that the necessary force for achieving bending or breakage is greater for a shorter beam. By virtue of this combined effect, the risk of uncontrolled bending or breakage of the roof bar outside the deformation zone is considerably reduced if deformation zones of moderate length are used.

According to the above-stated, the deformation zone is divided into segments. According to one embodiment of the invention, the segments are arranged with a geometry which ensures that the compressive stress at the most heavily loaded point for each cross section within each segment is constant or decreasing in the rearward direction. This means that the compressive stress at the most heavily loaded point for each cross section within the whole of the deformation zone is constant or decreasing in the rearward direction.

According to an alternative embodiment, each segment contains a weakening of the roof bar in the form of a buckling notch or a waster. Plasticization will begin in the vicinity of the buckling notches in which the segment has the greatest compressive stress. As a result of the geometric configuration of the roof bar and the weakenings, the segments of the deformation zones are guaranteed to be plasticized in the direction from front to rear, with accompanying absorption of energy.

The segments thus constitute a virtual division of the deformation zone, in which each segment contains, should local weakenings occur, one such weakening.

In the contingent patent claims, preferred embodiments are defined which provide further reduced risk of buckling of the roof bar.

### DESCRIPTION OF THE FIGURES

The invention will be described in greater detail below with reference to the appended drawing figures, in which:
- Fig. 1: shows schematically a vehicle cab according to the prior art,
- Fig. 2: shows schematically a vehicle cab according to the prior art, in which the roof bar has been buckled in a collision,
- Fig. 3: shows schematically the same collision process as in figure 2, in which a roof bar according to the invention has been utilized,
- Fig. 4: shows a simulation of a collision process in which a roof bar according to the invention is utilized,
- Fig. 5: shows a load case for a roof bar,
- Fig. 5a-5d: show different technical solutions for achieving deformation zones in the roof bar,
- Fig. 6: shows necessary compressive force for plastic deformation of the roof bar as a function of the position in the longitudinal direction of the roof bar for a deformation zone configuration which is optimized for a certain vehicle,
- Fig. 7: shows a cab according to the invention in perspective view.

### PREFERRED EMBODIMENTS

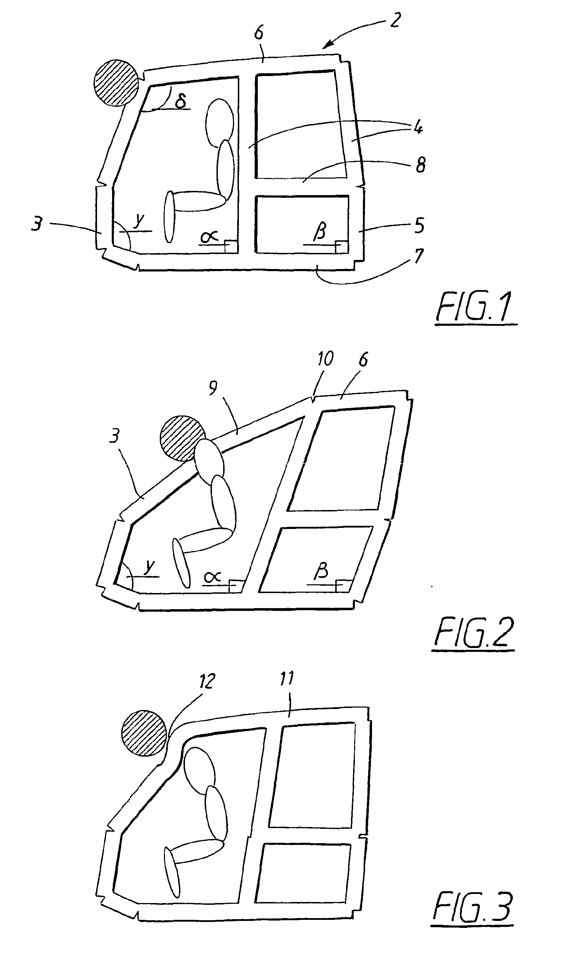

In fig. 1 is shown a side view of a cab 1 according to the prior art. The cab is constructed around a frame construction 2 comprising, on each side of the cab, a front A-pillar 3 and, as appropriate, an intermediate B-pillar 4 and a rear C-pillar 5. These pillars 3-5 are substantially upright and are arranged to lend the cab stability and support a roof bar 6. The roof bar 6 is arranged to support the roof of the cab. In the lower part of the cab there is also a substantially horizontally arranged lower floor beam 7, supporting the A-pillar 3, the B-pillar 4 and the C-pillar 5. The opposite side of the cab (not shown) has an identical set of A, B and C-pillars. The cab further comprises a front transverse beam (not shown), which mutually connects the two front supporting A-pillars, and a rear transverse beam (not shown), which mutually connects the two rear supporting B or C-pillars. In addition to the floor beam 7, the cab can also comprise further longitudinal beams 8, which are arranged to lend further stability to the cab.

Figure 2 illustrates the cab shown in figure 1 after collision with a fixed object which has struck the upper part of the cab at the level of the roof bar. This type of collision can occur when a vehicle is jammed against the roof in a viaduct. In the collision, the roof bar 6, owing to its rigid structure, has been displaced rearward in the cab. The rear part of the cab has therefore been deformed as a result of the shearing forces generated. The shearing results, inter alia, in an alteration of the angle α between B-pillar 4 and floor beam 7. The angle β between C-pillar 5 and floor beam 7, and the angle γ between A-pillar 3 and floor beam 7, have also been altered.

Since the roof bar initially is not significantly deformed, the compressive force in the longitudinal direction of the roof bar is high. This results in the roof bar being able to be buckled. Figure 2 illustrates how the roof bar 6 has been buckled close to the securement to the B-pillar 4. In the course of the buckling, very large deformations occur in the front part of the cab, in which the front part 9 of the roof bar 6 and the A-pillar 3 are bent in to the cab like a pair of pivot arms hinge-fastened at the buckling point 10 of the roof bar.
Figure 3 shows diagrammatically a cab of the same construction as in figure 1 and 2, but in which the roof bar 11 has been configured according to the invention. The cab has been exposed to the same collision as the cab shown in figure 2. The roof bar 11 has a deformation zone 12 in the front part of the roof bar directed toward the A-pillar 3. The deformation zone is divided into a set of consecutively arranged segments 12a-12e. The deformation zone 12 is arranged with a geometry which ensures that the compressive stress at the most heavily loaded point in each segment 12a-12e is constant or decreasing for following segments in the rearward direction. Hence the whole of the deformation zone 12 has to be deformed, with accompanying absorption of energy, before the roof bar can be broken or bent outside the deformation zone. Further, the geometric configuration ensures that plasticization first begins in the foremost segment and then propagates in the rearward direction in consecutively following segments. Since the deformation zone is deformed with accompanying absorption of energy, the load on other parts of the cab is reduced. This has the result that the deformation in the rear part of the cab is slight.

Should the deformation zone of the roof bar be completely deformed, the force action in the longitudinal direction of the roof bar occurs on a shorter roof bar than was initially the case. A shorter roof bar can be subjected to higher load before buckling occurs for a given dimension of the roof bar. Further, a part of the energy to be absorbed by the vehicle in the collision has already been spent on deformation of the deformation zone of the roof bar. By virtue of this combined effect, the risk of buckling is considerably reduced if deformation zones of moderate length are used. Since the roof bar no longer buckles, but rather the deformation zone of the roof bar is deformed, lesser deformations of the front part of the cab also occur. The invention is especially favorable when it is utilized in cabs in which the roof bar 11 is joined to the A-pillar 3 at an intermediate angle δ less than 135°. Should buckling take place, greater penetration into the cab occurs for cabs in which the A-pillar forms a steep front against the roof bar, i.e. cabs in which the roof bar 11 is joined to the A-pillar 3 at an intermediate angle δ proximate to 90°.

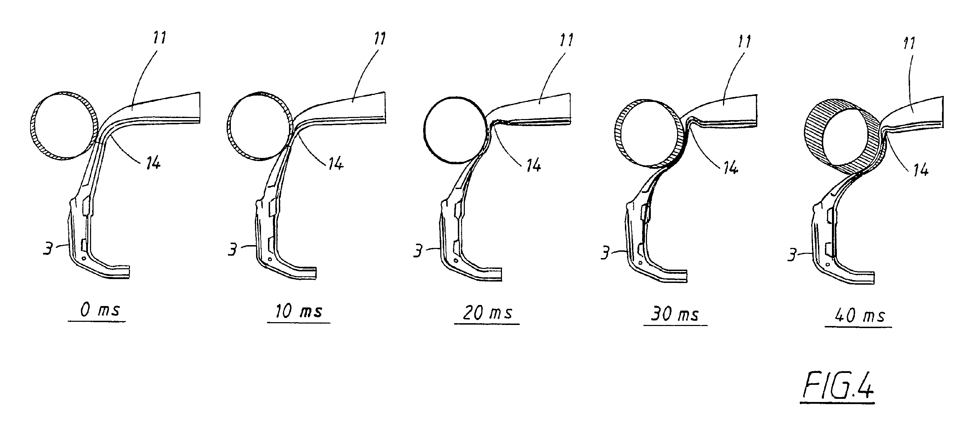

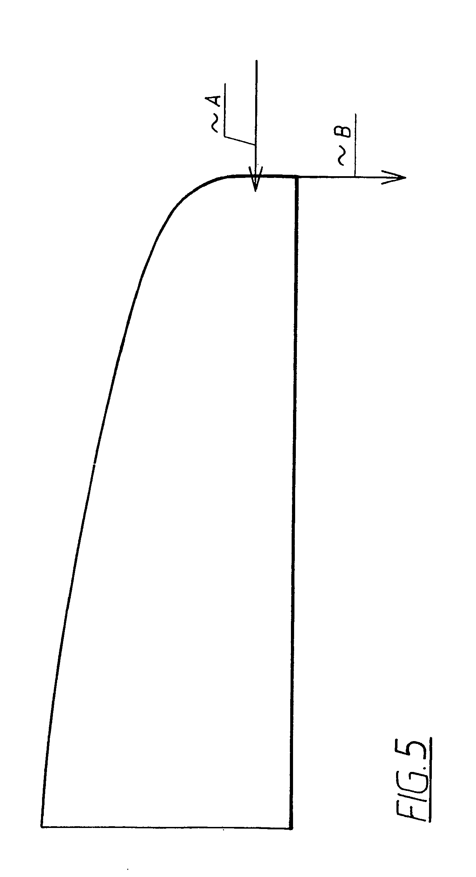

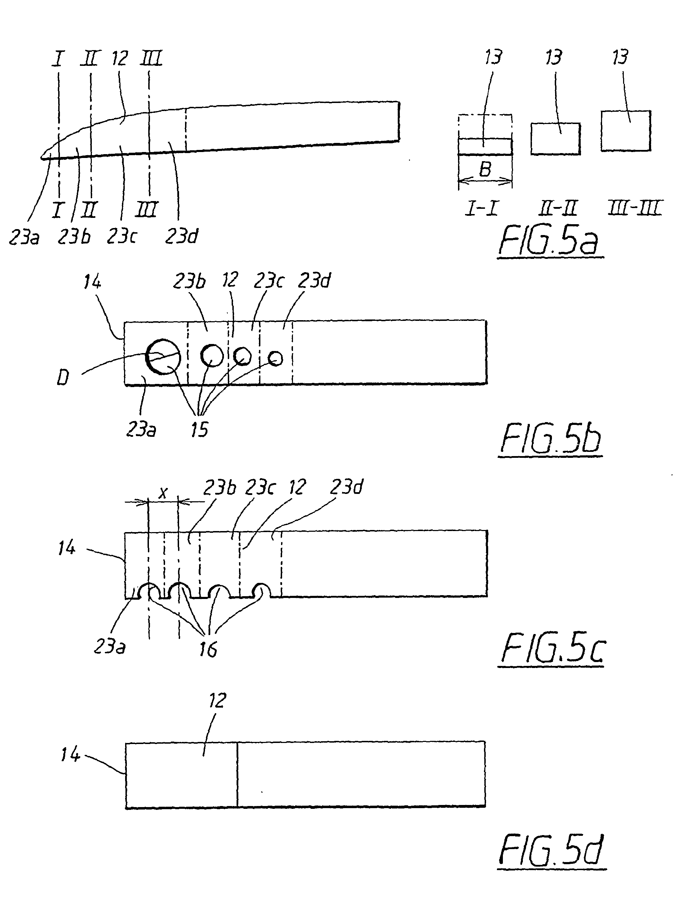

In figure 4 is shown a simulation of a collision process in which a roof bar according to the invention is utilized. The simulation shows that buckling does not take place. The figure illustrates that the roof bar 3 is connected to the A-pillar 3 in a connecting region 14. The simulation is conducted according to the Swedish impact test series, the front impact part. The dimensions for the deformation zone of the roof bar are given by h=50+3*(x)^{1/2} mm, i.e. A=50 and B=3 in the formula for the shape. In the simulation, on the one hand a compressive force acting along the roof bar is applied and, on the other hand, a bending force acting transversely to the roof bar, as illustrated in figure 5. In order to obtain a compressive stress in the roof bar, the maximum value of which for each cross section is constant along the whole of the roof bar, the height h of the roof bar shall vary according to h=A+B(x)^{1/2}, in which A is proportional to the compressive force acting along the roof bar and B is proportional to the force acting transversely to the roof bar. The relationship between these two forces is given by the standardized impact test series. The size of A and B is optimized for a chosen load case and a given cab structure. Since local disturbance forces are generated on the part of the beam in which the impact occurs, plasticization will occur from the front part of the deformation zone rearward in the event of an actual collision. Plate thickness and material suitably chosen to achieve good results.

In figures 5a-5d are shown different embodiments of the deformation zone of the roof bar. The deformation zone is preferably configured such that the necessary compressive force for plastic deformation of the roof bar increases from a connecting region, in which said roof bar and front A-pillar are connected, in the direction rearward toward said rear supporting B or C-pillar. The deformation zone is divided into a set of consecutively arranged segments 23a-23d, in which the deformation zone is arranged with a geometry which ensures that the compressive force at the most heavily loaded point in each segment is constant or decreasing for following segments in the rearward direction. Should the deformation zone be configured such that the flexural rigidity constantly increases in the rearward direction, either as a result of increasing beam height, according to the embodiment shown in figure 5a, or as a result of constant alteration of the material composition, as shown in figure 5d, the division into segments can be realized arbitrarily. Should local weakenings be arranged along the beam, as is shown in the exemplary embodiment as illustrated in figure 5b and 5c, each segment shall contain such a weakening.

In figure 5a, the roof bar, within the deformation zone 12, has a cross-sectional area 13 which increases from a connecting region 14, in which said roof bar and front A-pillar are connected, in the direction rearward toward said rear supporting B or C-pillar. Also shown in the figure are three sections I-I, II-II and III-III through the roof bar. In the preferred example shown, the roof bar has the same width B in the various cross sections, but increasing height in the rearward direction.

In figure 5b, the deformation zone has recesses 15 having a cross-sectional area D which decreases from a connecting region, in which said roof bar and front A-pillar are connected, in the direction rearward toward said rear supporting B or C-pillar. The recesses result in the load-absorbing cross-sectional area of the roof bar increasing in the direction rearward along the roof bar. The deformation zone is divided into segments 23a-23d, in which each segment contains a recess.

In figure 5c, the deformation zone has buckling notches 16 arranged at an interval X which increases from a connecting region 14, in which said roof bar and front A-pillar are connected, in the direction rearward toward said rear supporting B or C-pillar. It is also possible to configure the buckling notches with different depth or shape and thereby cause the necessary compressive force for plastic deformation of the roof bar to increase from a connecting region, in which said roof bar and front A-pillar are connected, in the direction rearward toward said rear supporting B or C-pillar. The deformation zone is divided into segments 23a-23d, in which each segment contains a buckling notch 16.

In figure 5d, the deformation zone has a material composition arranged such that the necessary compressive force for plastic deformation of the roof bar increases in the direction rearward toward said rear supporting B or C-pillar. The material composition can be achieved by forming the roof bar in an alloy in which the composition varies along the length of the roof bar. The alloy is formed with increasing degree of hardness in the direction rearward toward said rear supporting B or C-pillar. Alternatively, the roof bar can be achieved by lamination formed with increasing degree of hardness in the direction rearward toward said rear supporting B or C-pillar. According to another alternative embodiment, the varying degree of hardness is achieved by local heat treatment of the roof bar, whereby the roof bar is given a locally varying degree of softness, which hardens in the direction rearward toward said rear supporting B or C-pillar.

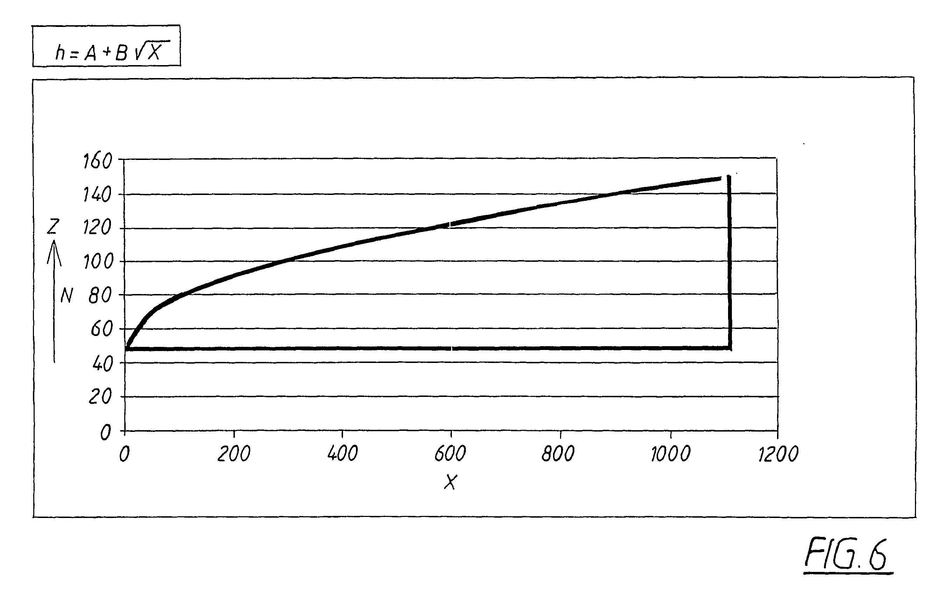

In figure 6 a preferred embodiment of the invention is shown, in which the roof bar, within said deformation zone, is configured such that the necessary compressive force for plastic deformation of the roof bar increases according to the formula A+B*X^{½}, in which X corresponds to the distance from the connecting region in which said roof bar and front A-pillar are connected. This is preferably achieved by ensuring that the height of the roof bar varies according to h=A+B*X^{½}, the maximal compressive stress being constant along the whole of the deformation zone. Since no local weakenings are present, the whole of the deformation zone can be regarded as one segment. In one embodiment of the invention, the whole of the roof bar is made with a height according to the above formula from the front end of the roof bar by the A-pillar to the rear end of the roof bar by the B-pillar. In another embodiment, the height outside the deformation zone exceeds the height given by the above formula.

According to preferred embodiments, the deformation zone extends along between 50 and 200 mm for a roof bar 1000 mm in length. The deformation zone therefore comprises between 5 and 20% of the length of the roof bar.

According to a further preferred embodiment, the roof bar is configured such that the necessary compressive force for buckling of the roof bar is at least 20%, preferably at least 40%, greater at that end of the deformation zone situated farthest from said connecting region than the necessary compressive force for buckling of the roof bar close to said connecting region. This is achieved by dimensioning of the length of the deformation zone. The necessary force for buckling the whole of the unaffected roof bar, i.e. the necessary compressive force for buckling of the roof bar by said connecting region, is calculated theoretically, in which the deformation zone is assumed not to be deformable. This is necessary, since the deformation zone has been configured such that buckling cannot take place before the whole of the deformation zone has been deformed.

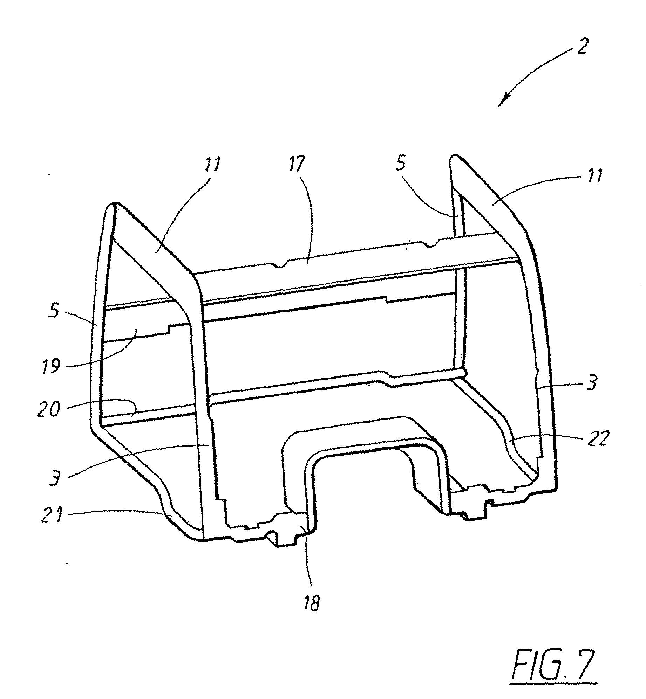

In figure 7 is shown a frame construction 2 for a vehicle cab according to the invention. The frame construction 2 comprises a pair of front A-pillars 3 and a pair of rear C-pillars 5. The A-pillars 3 are connected by an upper front transverse beam 17 and a lower front transverse beam 18. The C-pillars 5 are connected by an upper rear transverse beam 19 and a lower rear transverse beam 20. The A and C-pillars are connected by lower longitudinal beams 21, 22. The roof bars 11 connect the A-pillar to the B-pillar in the roof region.

## Claims

1. A vehicle cab (1) having a frame construction (2) comprising a pair of front supporting A-pillars (3), a pair of rear supporting B or C pillars (4, 5) and a pair of roof bars (11) which are supported by and connect said front supporting A-pillars (3) to said rear supporting B or C-pillars (4, 5), **characterized in that** said roof bars (11) have a deformation zone (12) in the front part of the roof bar directed toward said A-pillar (3), in which said deformation zone (12) is divided into a set of consecutively arranged segments (23a-23d) in which the deformation zone (12) is arranged with a geometry which ensures that the compressive stress at the most heavily loaded point in each segment (23a-23d) is constant or decreasing for following segments in the rearward direction.

2. The vehicle cab as claimed in claim 1, **characterized in that** said segments (23a-23d) are arranged with a geometry which ensures that the compressive stress at the most heavily loaded point for each cross section within each segment is constant or decreasing in the rearward direction.

3. The vehicle cab as claimed in claim 1 or 2, **characterized in that** said deformation zone (12) is configured such that the necessary applied compressive force for plastic deformation of the roof bar (11) increases from a connecting region (14), in which said roof bar (11) and front A-pillar (3) are connected, in the direction rearward toward said rear supporting B or C-pillar (4, 5).

4. The vehicle cab as claimed in claim 3, **characterized in that** the roof bar, within said deformation zone (12), is configured such that the necessary compressive force for plastic deformation of the roof bar (11) increases according to the formula A+B*X^{½}, in which X corresponds to the distance from the connecting region (14) in which said roof bar (11) and front A-pillar (3) are connected.

5. The vehicle cab as claimed in any one of the preceding claims, **characterized in that** the roof bar (11), within said deformation zone (12), is configured with a height according to the formula A+B*X^{½}, in which X corresponds to the distance from the connecting region (14) in which said roof bar (11) (11) and front A-pillar (14) are connected.

6. The vehicle cab as claimed in claim 3 or 4, **characterized in that** the roof bar (11), within said deformation zone (12), has a cross-sectional area which increases from a connecting region (14), in which said roof bar (11) and front A-pillar (3) are connected, in the direction rearward toward said rear supporting B or C-pillar (4, 5), whereby the necessary compressive force for plastic deformation of the roof bar (11) increases in the direction rearward toward said rear supporting B or C-pillar (4, 5).

7. The vehicle cab as claimed in claim 3, 4 or 5, **characterized in that** the roof bar (11), within said deformation zone (12), has recesses (15) having a cross-sectional area which decreases from a connecting region (14), in which said roof bar (11) and front A-pillar (3) are connected, in the direction rearward toward said rear supporting B or C-pillar (4, 5), whereby the necessary compressive force for plastic deformation of the roof bar (11) increases in the direction rearward toward said rear supporting B or C-pillar (4, 5).

8. The vehicle cab as claimed in any one of claims 3-6, **characterized in that** the roof bar (11), within said deformation zone, has buckling notches (16) arranged at an interval which increases from a connecting region (14), in which said roof bar (11) and front A-pillar (3) are connected, in the direction rearward toward said rear supporting B or C-pillar (4, 5), whereby the necessary compressive force for plastic deformation of the roof bar increases in the direction rearward toward said rear supporting B or C-pillar (4, 5).

9. The vehicle cab as claimed in any one of claims 3-7, **characterized in that** the roof bar (11), within said deformation zone (12), has a material composition arranged such that the necessary compressive force for plastic deformation of the roof bar (11) increases in the direction rearward toward said rear supporting B or C-pillar (4, 5).

10. The vehicle cab as claimed in claim 8, **characterized in that** said material composition is achieved by local heat treatment of the roof bar (11), whereby the roof bar (11) is given a locally varying degree of softness, which hardens in the direction rearward toward said rear supporting B or C-pillar (4, 5).

11. The vehicle cab as claimed in any one of the preceding claims, **characterized in that** the deformation zone (12) extends along between 5 and 20% of the length of the roof bar.

12. The vehicle cab as claimed in any one of the preceding claims, **characterized in that** the necessary compressive force for buckling of the roof bar (11) is at least 20%, preferably at least 40%, greater at that end of the deformation zone situated farthest from said connecting region (14) than the necessary compressive force for buckling of the roof bar close to said connecting region (14).

13. A truck comprising a vehicle cab as claimed in any one of the preceding patent claims.

## Patentansprüche

1. Kraftfahrzeugführerhaus (1) mit einer Rahmenkonstruktion (2), welche ein Paar an vorderen, tragenden A-Säulen (3), ein Paar an hinteren, tragenden B- oder C-Säulen (4, 5) und ein Paar an Dachrelinge (11) aufweist, welche durch die vorderen, tragenden A-Säulen (3) getragen werden und dieselben mit den hinteren, tragenden B- oder C-Säulen (4, 5) verbinden,
**dadurch gekennzeichnet,**
**dass** die Dachrelinge (11) einen Verformungsbereich (12) im vorderen Teil der Dachreling aufweisen, welcher zur A-Säule (3) gerichtet ist, wobei der Verformungsbereich (12) in einen Satz von nacheinander angeordneten Segmenten (23a-23d) unterteilt ist, in welchen der Verformungsbereich (12) mit einer Geometrie angeordnet ist, welche gewährleistet, dass die Druckspannung an der am schwersten belasteten Stelle in jedem Segment (23a-23d) konstant ist oder für die nachfolgenden Segmente nach hinten abnimmt.

2. Kraftfahrzeugführerhaus nach Anspruch 1, **dadurch gekennzeichnet, dass** die Segmente (23a-23d) mit einer Geometrie angeordnet sind, welche gewährleistet, dass die Druckspannung an der am schwersten belasteten Stelle für jeden Querschnitt innerhalb jedes Segments konstant ist oder nach hinten abnimmt.

3. Kraftfahrzeugführerhaus nach Anspruch 1 oder 2, **dadurch gekennzeichnet, dass** der Verformungsbereich (12) derart konfiguriert ist, dass die notwendige, angelegte Druckkraft zur plastischen Verformung der Dachreling (11) von einem Verbindungsbereich (14), in welchem die Dachreling (11) und die vordere A-Säule (3) verbunden sind, nach hinten zu der hinteren, tragenden B- oder C-Säule (4, 5) zunimmt.

4. Kraftfahrzeugführerhaus nach Anspruch 3, **dadurch gekennzeichnet, dass** die Dachreling innerhalb des Verformungsbereiches (12) derart konfiguriert ist, dass die notwendige Druckkraft zur plastischen Verformung der Dachreling (11) gemäß der Formel A+B*X^{1/2} zunimmt, wobei X dem Abstand vom Verbindungsbereich (14) entspricht, in welchem die Dachreling (11) und die vordere A-Säule (3) verbunden sind.

5. Kraftfahrzeugführerhaus nach einem der vorangehenden Ansprüche, **dadurch gekennzeichnet, dass** die Dachreling (11) innerhalb des Verformungsbereiches (12) mit einer Höhe gemäß der Formel A+B*X^{1/2} konfiguriert ist, wobei X dem Abstand vom Verbindungsbereich (14) entspricht, in welchem die Dachreling (11) und die vordere A-Säule (3) verbunden sind.

6. Kraftfahrzeugführerhaus nach Anspruch 3 oder 4, **dadurch gekennzeichnet, dass** die Dachreling (11) innerhalb des Verformungsbereiches (12) eine Querschnittsfläche aufweist, welche von einem Verbindungsbereich (14), in welchem die Dachreling (11) und vordere A-Säule (3) verbunden sind, nach hinten zu der hinteren, tragenden B- oder C-Säule (4, 5) zunimmt, wodurch die notwendige Druckkraft zur plastischen Verformung der Dachreling (11) nach hinten zu der hinteren, tragenden B- oder C-Säule (4, 5) zunimmt.

7. Kraftfahrzeugführerhaus nach Anspruch 3, 4, oder 5, **dadurch gekennzeichnet, dass** die Dachreling (11) innerhalb des Verformungsbereiches (12) Aussparungen (15) mit einer Querschnittsfläche aufweist, welche von einem Verbindungsbereich (14), in welchem die Dachreling (11) und vordere A-Säule (3) verbunden sind, nach hinten zu der hinteren, tragenden B- oder C-Säule (4, 5) abnimmt, wodurch die notwendige Druckkraft zur plastischen Verformung der Dachreling (11) nach hinten zu der hinteren, tragenden B- oder C-Säule (4, 5) zunimmt.

8. Kraftfahrzeugführerhaus nach einem der Ansprüche 3-6, **dadurch gekennzeichnet, dass** die Dachreling (11) innerhalb des Verformungsbereiches Stauchungskerben (16) aufweist, welche in einem Abstand angeordnet sind, welcher von einem Verbindungsbereich (14), in welchem die Dachreling (11) und die vordere A-Säule (3) verbunden sind, nach hinten zu der hinteren, tragenden B- oder C-Säule (4, 5) zunimmt, wodurch die notwendige Druckkraft zur plastischen Verformung der Dachreling nach hinten zu der hinteren, tragenden B- oder C-Säule zunimmt.

9. Kraftfahrzeugführerhaus nach einem der Ansprüche 3-7, **dadurch gekennzeichnet, dass** die Dachreling (11) innerhalb des Verformungsbereiches (12) eine Materialzusammensetzung aufweist, welche derart vorgesehen ist, dass die notwendige Druckkraft zur plastischen Verformung der Dachreling (11) nach hinten zu der hinteren, tragenden B- oder C-Säule (4, 5) zunimmt.

10. Kraftfahrzeugführerhaus nach Anspruch 8, **dadurch gekennzeichnet, dass** die Materialzusammensetzung durch eine lokale Wärmebehandlung der Dachreling (11) erzielt wird, wodurch der Dachreling (11) ein sich lokal verändernder Weichheitsgrad verliehen wird, welcher sich nach hinten zu der hinteren, tragenden B- oder C-Säule (4, 5) verhärtet.

11. Kraftfahrzeugführerhaus nach einem der vorangehenden Ansprüche, **dadurch gekennzeichnet, dass** sich der Verformungsbereich (12) entlang zwischen 5 und 20% der Länge der Dachreling erstreckt.

12. Kraftfahrzeugführerhaus nach einem der vorangehenden Ansprüche, **dadurch gekennzeichnet, dass** die notwendige Druckkraft zum Stauchen der Dachreling (11) mindestens um 20%, vorzugsweise um mindestens 40%, größer ist an dem Ende des Verformungsbereiches, welcher sich vom Verbindungsbereich (14) am weitesten entfernt befindet, als die notwendige Druckkraft zum Stauchen der Dachreling in der Nähe des Verbindungsbereiches (14).

13. Lastwagen mit einem Kraftfahrzeugführerhaus nach einem der vorangehenden Patentansprüche.

## Revendications

1. Cabine de véhicule (1) ayant une construction de châssis (2) comportant une paire de piliers en A de support avant (3), une paire de piliers en B ou C de support arrière (4, 5) et une paire de barres de toit (11) qui sont supportées par lesdits piliers en A de support avant (3), et qui connectent ceux-ci auxdits piliers en B ou C de support arrière (4, 5), **caractérisée en ce que** lesdites barres de toit (11) ont une zone de déformation (12) dans la partie avant de la barre de toit dirigée vers ledit pilier en A (3), dans laquelle ladite zone de déformation (12) est divisée en un ensemble de segments agencés consécutivement (23a à 23d) où la zone de déformation (12) est agencée avec une symétrie qui garantit que la contrainte de compression au niveau du point chargé le plus lourdement dans chaque segment (23a à 23d) est constante ou décroissante pour des segments suivants dans la direction vers l'arrière.

2. Cabine de véhicule selon la revendication 1, **caractérisée en ce que** lesdits segments (23a à 23d) sont agencés avec une géométrie qui garantit que la contrainte de compression au niveau du point chargé le plus lourdement pour chaque coupe transversale dans chaque segment est constante ou décroissante dans la direction vers l'arrière.

3. Cabine de véhicule selon la revendication 1 ou 2, **caractérisée en ce que** ladite zone de déformation (12) est configurée de sorte que la force de compression appliquée nécessaire pour une déformation plastique de la barre de toit (11) augmente à partir d'une zone de connexion (14), dans laquelle ladite barre de toit (11) et ledit pilier en A avant (3) sont connectés, dans la direction vers l'arrière en direction dudit pilier en B ou C de support arrière (4, 5).

4. Cabine de véhicule selon la revendication 3, **caractérisée en ce que** la barre de toit, dans ladite zone de déformation (12), est configurée de telle sorte que la force de compression nécessaire pour une déformation plastique de la barre de toit (11) augmente selon la formule A+B*X^{1/2}, où X correspond à la distance à partir de la zone de connexion (14) dans laquelle ladite barre de toit (11) et ledit pilier en A avant (3) sont connectés.

5. Cabine de véhicule selon l'une quelconque des revendications précédentes, **caractérisée en ce que** la barre de toit (11), dans ladite zone de déformation (12), est configurée avec une hauteur selon la formule A+B*X^{1/2}, où X correspond à la distance à partir de la zone de connexion (14) dans laquelle ladite barre de toit (11) et ledit pilier en A avant (14) sont connectés.

6. Cabine de véhicule selon la revendication 3 ou 4, **caractérisée en ce que** la barre de toit (11), dans ladite zone de déformation (12), a une aire de coupe transversale qui augmente à partir d'une zone de connexion (14), dans laquelle ladite barre de toit (11) et ledit pilier en A avant (3) sont connectés, dans la direction vers l'arrière en direction dudit pilier en B ou C de support arrière (4, 5), de sorte que la force de compression nécessaire pour une déformation plastique de la barre de toit (11) augmente dans la direction vers l'arrière en direction dudit pilier en B ou C de support arrière (4, 5).

7. Cabine de véhicule selon la revendication 3, 4 ou 5, **caractérisée en ce que** la barre de toit (11), dans ladite zone de déformation (12), a des évidements (15) ayant une aire en coupe transversale qui diminue à partir d'une zone de connexion (14), dans laquelle ladite barre de toit (11) et ledit pilier en A avant (3) sont connectés, dans la direction vers l'arrière en direction dudit pilier en B ou C de support arrière (4, 5), de sorte que la force de compression nécessaire pour une déformation plastique de la barre de toit (11) augmente dans la direction vers l'arrière en direction dudit pilier en B ou C de support arrière (4, 5).

8. Cabine de véhicule selon l'une quelconque des revendications 3 à 6, **caractérisée en ce que** la barre de toit (11), dans ladite zone de déformation, a des encoches de gauchissement (16) agencées à un intervalle qui augmente depuis une partie de connexion (14), dans laquelle ladite barre de toit (11) et ledit pilier en A avant (3) sont connectés, dans la direction vers l'arrière en direction dudit pilier en B ou C de support arrière (4, 5), de sorte que la force de compression nécessaire pour une déformation plastique de la barre de toit augmente dans la direction vers l'arrière en direction dudit pilier en B ou C de support arrière (4, 5).

9. Cabine de véhicule selon l'une quelconque des revendications 3 à 7, **caractérisée en ce que** la barre de toit (11), dans ladite zone de déformation (12), a une composition de matériau agencée de telle sorte que la force de compression nécessaire pour une déformation plastique de la barre de toit (11) augmente dans la direction vers l'arrière en direction dudit pilier en B ou C de support arrière (4, 5).

10. Cabine de véhicule selon la revendication 8, **caractérisée en ce que** ladite composition de matériau est obtenue par un traitement thermique local de la barre de toit (11), de sorte que la barre de toit (11) est dotée d'un degré de mollesse variable localement, durcissant dans la direction vers l'arrière en direction dudit pilier en B ou C de support arrière (4, 5).

11. Cabine de véhicule selon l'une quelconque des revendications précédentes, **caractérisée en ce que** la zone de déformation (12) s'étend le long d'entre 5 et 20 % de la longueur de la barre de toit.

12. Cabine de véhicule selon l'une quelconque des revendications précédentes, **caractérisée en ce que** la force de compression nécessaire pour un gauchissement de la barre de toit (11) est au moins 20 %, de préférence au moins 40 %, supérieure à cette extrémité de la zone de déformation située la plus loin de ladite zone de connexion (14) à la force de compression nécessaire pour gauchissement de la barre de toit proche de ladite zone de connexion (14).

13. Camion comportant une cabine de véhicule selon l'une quelconque des revendications précédentes.
